Europäisches Patentamt

European Patent Office

Office européen des brevets

(19)

(11)  **EP 0 341 738 B1**

(12)  **EUROPÄISCHE PATENTSCHRIFT**

(45) Veröffentlichungstag und Bekanntmachung des Hinweises auf die Patenterteilung:
**02.07.1997**  **Patentblatt 1997/27**

(51) Int Cl.⁶: **G01S 5/10**, H04Q 7/06

(21) Anmeldenummer: **89108603.5**

(22) Anmeldetag: **12.05.1989**

(54) **Einrichtung zur Eigenstandortbestimmung, insbesondere von Fahrzeugen**

Apparatus for own position-fixing, especially for vehicles

Dispositif de détermination de la position propre, notamment pour des véhicules

(84) Benannte Vertragsstaaten:
**AT CH DE FR GB IT LI NL SE**

(30) Priorität: **13.05.1988  DE 3816377**

(43) Veröffentlichungstag der Anmeldung:
**15.11.1989  Patentblatt 1989/46**

(73) Patentinhaber:
- **AEG MOBILE COMMUNICATION GmbH**
  **D-89081 Ulm (DE)**
- **DAIMLER-BENZ AKTIENGESELLSCHAFT**
  **70327 Stuttgart (DE)**
- **MOTOROLA GmbH**
  **D-60488 Frankfurt (DE)**
- **Philips Patentverwaltung GmbH**
  **22335 Hamburg (DE)**
- **ROBERT BOSCH GMBH**
  **14199 Berlin (DE)**
- **SIEMENS AKTIENGESELLSCHAFT**
  **80333 München (DE)**
- **Alcatel SEL Akfiengesellschaft**
  **D-70435 Stuttgart (DE)**

(72) Erfinder: **Forth, Robert**
**D-6078 Neu Isenburg (DE)**

(74) Vertreter: **Friedmann, Jürgen, Dr.-Ing. et al**
**c/o Robert Bosch GmbH,**
**Postfach 30 02 20**
**70442 Stuttgart (DE)**

(56) Entgegenhaltungen:
**EP-A- 0 006 448**        **EP-A- 0 123 562**
**EP-A- 0 250 105**        **EP-A- 0 320 913**
**DE-A- 2 709 855**        **DE-A- 3 516 357**
**US-A- 4 703 444**

- **FUNKTECHNIK, Band 41, Nr. 4, April 1986, Seiten 146-149, Heidelberg, DE; H. HALAMEK et al.: "Zellgrenzdetekfion mit relativer Entfernungsmessung im Netz C"**
- **Symposium Land Vehicle Navigation, 1984, der Deutschen Gesellschaft für Ortung und Navigation, Abschnitt 13**

**Beschreibung**

Die Erfindung betrifft eine Einrichtung zur Eigenstandortbestimmung insbesondere von Fahrzeugen, mit Hilfe eines bestehenden, netzsynchronen Zellular-Mobilfunknetzes.

Bekannt sind einerseits Verfahren zur Standortbestimmung von Fahrzeugen, die auf einem Hyperbel-Ortungsverfahren beruhen, z. B. DE-AS 21 37 846, E-PS 0 006 448, DE-OS 36 33 557, "Symposium Land Vehicle Navigation", 1984, der Deutschen Gesellschaft für Ortung und Navigation in Abschnitt 13 und DE-OS 30 29 466. Alle Verfahren erfordern eine erhebliche Infrastruktur, außerdem ist die Genauigkeit von der Synchronizität der von den Feststationen ausgesendeten Signale abhängig.

Es ist weiter ein System zur Bestimmung der Fahrzeugroute bekannt, das von einem bekannten Navigationssystem, z. B. Loran ausgeht. Die im Loran-Empfänger ermittelten Standortdaten werden zusammen mit dem gewünschten Zielort an eine Zentralstation gesandt. Dies geschieht über einen Fahrzeugsender, der z. B. Teil der Mobilstation eines Zellularfunknetzes sein kann. Ein Computer der Zentralstation errechnet aus dem Standort und den Zielkoordinaten die Fahrzeugroute, die von Zentralstation an den Empfänger der Mobilstation zurückgesendet werden. Wesentlich im gegebenen Zusammenhang ist, daß ein gesonderter Navigationsempfänger neben einer Mobilfunkstation vorhanden sein und eine Kommunikation zwischen Fahrzeugstation und Zentralstation stattfinden muß (EP 01 23 562).

Bekannt sind weiter Verfahren zur Zellgrenzdetektion durch eine relative Entfernungsmessung nach dem Hyperbel-Verfahren in netzsynchronen Zellular-Mobilfunknetze (DE-OS 33 35 128, Funktechnik 41 (1986), Heft 4, S. 146-149)).

Dort findet neben den für den zu betrachteten Gegenstand unwesentlichen, von der Feststationen ausgehenden Ortungsvorgängen auch in jeder Mobilstation zur Zuordnung ihres jeweiligen Standortes zu einer Funkzelle eine Messung der Laufzeitdifferenz mehrerer, von verschiedenen Funkfeststationen ausgesandten Funktelegramme statt.

Die Erfindung geht unter Zugrundelegung dieses Standes der Technik von folgender Erkenntnis aus:

Einerseits sind in bestehenden netzsynchronen Zellular-Mobilfunknetzen die infrastrukturellen Voraussetzungen für eine Eigenortung von Mobilfunkstationen zum größten Teil vorhanden, nämlich ein Netz von Feststationen und eine absolute Netzsynchronität zur Anwendung des Hyperbel-Ortungsverfahrens.

Andererseits besteht infolge der Kostendegression von Mikroprozessoren auch hoher Rechengeschwindigkeit kein Grund mehr, die in der Mobilstation gemessene Laufzeitdifferenzwerte mit den bekannten Standortkoordinaten der zugehörigen Funkfeststationen in einem bei der Funkfeststation angeordneten zentralen Rechner miteinander zu verknüpfen.

Die Erfindung schlägt aus diesem Grunde vor, die Verknüpfung der vorgenannten Daten dezentral in einem jeder Mobilstation zugeordneten Mikrorechner durchzuführen.

Gemäß der Erfindung ist eine Einrichtung zur Eigenstandortbestimmung gemäß dem Gattungsbegriff durch wenigstens folgende Merkmale gekennzeichnet:

a) eine Empfängereinheit zum Empfang des netzeinheitlichen Organisationskanals mit Demodulator und Datenaufbereitung
b) eine Einrichtung zur Laufzeitdifferenzmessung mehrerer von verschiedenen Funkfeststationen ausgesandter Datentelegramme zu dem von einer Bezugsfunkfeststation ausgesandter Datentelegramm
c) einen speicher, in dem die verschiedenen Laufzeitdifferenzen, geordnet nach Funkfeststationen abgespeichert sind
d) einen Festspeicher mit den Standortkoordinaten aller Funkfeststationen
e) eine Recheneinheit, in der die Standortkoordinaten des Festspeichers mit dem Inhalt des Arbeitsspeichers verknüpft und die Standortkoordinaten durch Mittelung der nach dem Hyperbel-Ortungsverfahren ermittelten Meßergebnisse errechnet werden können.

Eine Einrichtung nach den Merkmalen a bis e der vorstehend angegebenen Lösung stellt erkennbar einen passiven Ortungsempfänger dar, bei dem auf die Teilnahme am Funktelefondienst verzichtet ist. Gleichwohl ist sein Einsatz von Vorteil, wenn es lediglich um die Ortung des eigenen Standortes geht. Wegen des Wegfalles des Sendeteils und der Sprach-Ein- und Ausgabe ließe sich ein solcher Navigationsempfänger nach Hinzufügung einer LCD-Anzeige für die Standortkoordinaten auch als tragbares Gerät ausführen.

Soll die Einrichtung jedoch nach einer anderen Ausprägung des Erfindungsgedankens lediglich als Zusatzeinrichtung einer bereits für den Funktelefondienst ausgerüsteten Mobilfunkstation dienen, sind lediglich die Merkmale d, e und ggf. eine Anzeigeeinheit zusätzlich erforderlich, um als Zusatzleistungsmerkmal zum Funktelefondienst eine eigene Standortanzeige zu erhalten, denn die Empfängereinheit, die Einrichtung zur Laufzeitdifferenzmessung und der Arbeitsspeicher sind bereits Bestandteile des herkömmlichen Empfangsteils einer Mobilfunkstation eines Zellular-Mobilfunknetzes.

Bei einer für das zusätzliche Leistungsmerkmal: "Bestimmung des eigenen Standortes" ausgebildeten Mobilfunkstation bietet sich in weiterer Ausbildung der Erfindung die Möglichkeit, die Standortkoordinaten auf Anforderung eines berechtigten Teilnehmers auch eines festen (Draht- oder Glasfaser) Netzes durch Anwahl des Funkteilnehmers und Rückübertragung über dessen Sender abrufbar zu gestalten.

Dabei können zweckmäßig die Standortkoordinaten auf einem Sprachkanal über ein Modem in digitaler Form übertragen werden.

Eine andere Möglichkeit besteht darin, in den Übertragungsweg zwischen Mobilstation und abrufenden Teilnehmer an irgendeiner Stelle eine digitale Sprachausgabe einzuschalten. Das kann vorteilhaft bereits in der Mobilstation geschehen, kann aber auch erst beim abrufenden Teilnehmer erfolgen.

Eine andere vorteilhafte Möglichkeit der Rückübertragung der Standortkoordinaten wäre die systemeigene Datenübertragung im Organisationskanal oder Sprachkanal. Außerdem wäre die Rückübertragung der Standortkoordinaten auf speziellen Datenkanälen denkbar.

Neben der bereits behandelten Anzeige der Standortkoordinaten über einen LCD-Display ist auch eine komfortablere Anzeige mit einem graphischen Display mit Darstellung von Kartenausschnitten denkbar, die ihre Hintergrundinformation aus einer geeigneten Datenbank (z. B. topographischen Datenbank) beziehen.

Für besondere Anwendungsfälle, wie z. B. der Sicherung von Werttransporten ist auch eine Mobilstation denkbar, die unter Verzicht auf Sprachkommunikation und der hierzu notwendigen Sprach-Ein- und Ausgabe lediglich zur Meldung des eigenen Standortes dient. Bei einer solchen, auf ein Standortmeldegerät abgemagerten Version einer Mobilstation ist auch der Wegfall einer Anzeigeeinheit zweckmäßig, weil das Standortmeldegerät nicht mehr zwangsläufig im Fahrerhaus eines Fahrzeug untergebracht werden müßte.

Im folgenden wird die Erfindung anhand von zwei Diagrammen und zwei Blockschaltbildern näher erläutert:

Es zeigen

Fig. 1     die in jeder Mobilstation eines Zellular-Funknetzes empfangenen Datentelegramme von verschiedenen Funkfeststationen und ihre Auswertung hinsichtlich der Laufzeit

Fig. 2     einen passiven Ortungsempfänger für die Eigenstandortbestimmung

Fig. 3     eine Zusatzeinrichtung zur einer Mobilstation zur Eigenstandortbestimmung

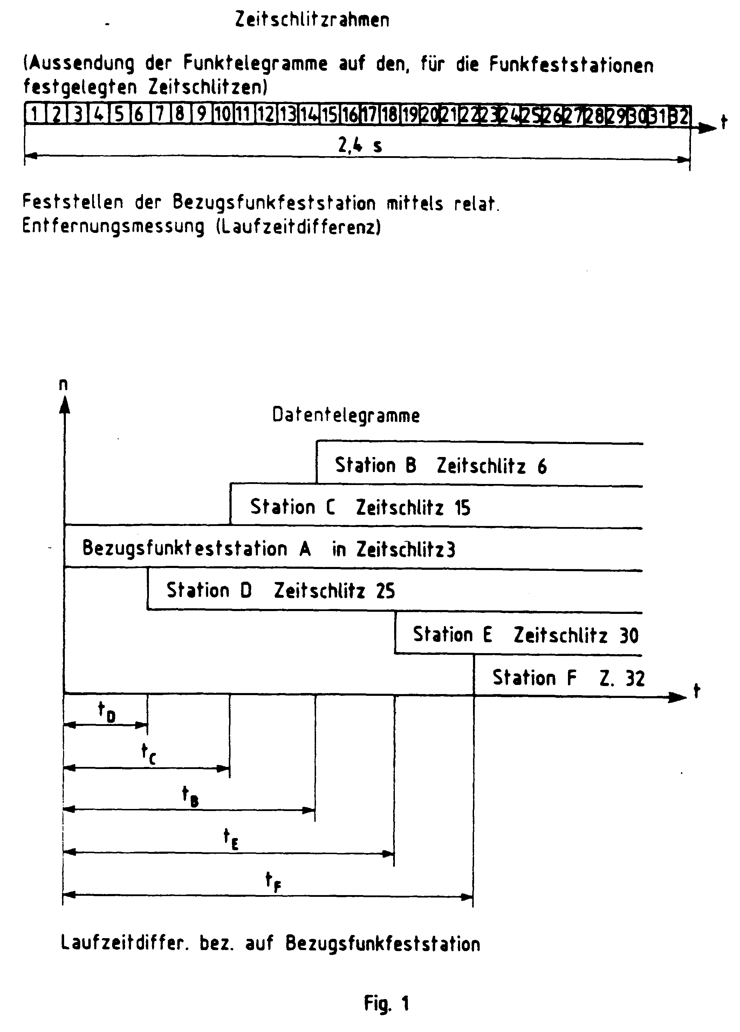

Das obere Diagramm der Fig. 1 zeigt die Zuordnung der verschiedenen Funkfeststationen zu einem der 32-Zeitschlitze des 2,4 s langen Impulsrahmens. Die Bezugsfunkfeststation wird aufgrund ihrer Feldstärke oder Entfernung ausgewählt.

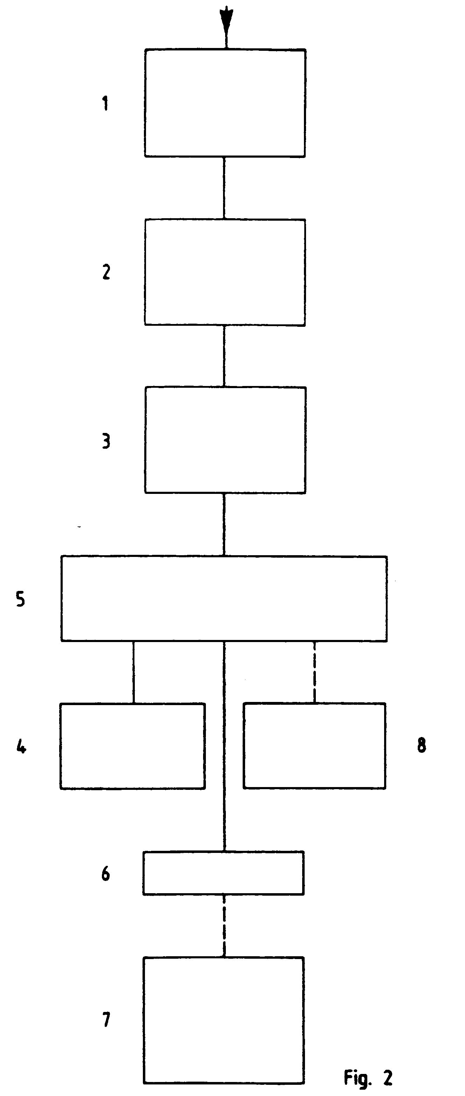

Das darunter angeordnete Diagramm zeigt die auftretenden Laufzeitdifferenzen der von den verschiedenen Funkfeststationen ausgesendeten Datentelegramme im Bezug auf die ausgewählte Bezugsfunkfeststation. Die in der Fig. 1 nur kurz dargestellten Messungen laufen in jeder Mobilstation eines netzsynchronen Zellular-Mobilfunknetzes ab. Sie sind z. B. in der bereits benannten Literaturstelle Funktechnik: 41 (1986), Heft 4, S. 146-149 im einzelnen beschrieben. Die Fig. 2 zeigt eine auf einen passiven Ortungsempfänger abgemagerte Mobilfunkstation. Die über eine Empfangsantenne auf dem netzeinheitlichen Organisationskanal (z. B. Netz-C der DBP 465,090 MHz) im zyklischen Wechsel ausgestrahlten Datentelegramme verschiedener Funkfeststationen werden in der Empfängereinheit 1 empfangen, demoduliert und nach Aufbereitung der Daten im Schaltungsblock 2 in zyklischer Folge die Laufzeit differenz zur der ausgewählten Bezugsfunkfeststation gemäß Fig. 1 unten, ermittelt.

Die Ergebnisse der Laufzeitdifferenzmessung werden in einen Arbeitsspeicher 3 eingegeben, der demzufolge eine Liste aller empfangenen Funkfeststationen mit der zugehörigen Laufzeitdifferenz enthält.

Andererseits sind in einem Festspeicher 4 die Koordinaten der geographischen Standorte aller vorhandenen Funkfeststationen abgespeichert. In der Recheneinheit 5 werden, gesteuert durch eine entsprechende Software, die Laufzeitdifferenzen der Datentelegramme der empfangenen Funkfeststationen mit den zugehörigen Standortkoordinaten verknüpft. Dies geschieht nach einem für das Hyperbel-Ortungsverfahren geeigneten Algorithmus. Die Eigenstandortkoordinaten werden auf einer Anzeigeeinheit 6, einem LCD-Display angezeigt.

Mit etwas größerem Aufwand ist auch die gestrichelt eingezeichnete Anzeige mit einem graphischen Display 7 als Alternative möglich. Dabei wird das graphische Display 7 aus einer geeigneten Datenbank 8 mit einem Kartenausschnitt als Hintergrundinformation beschrieben.

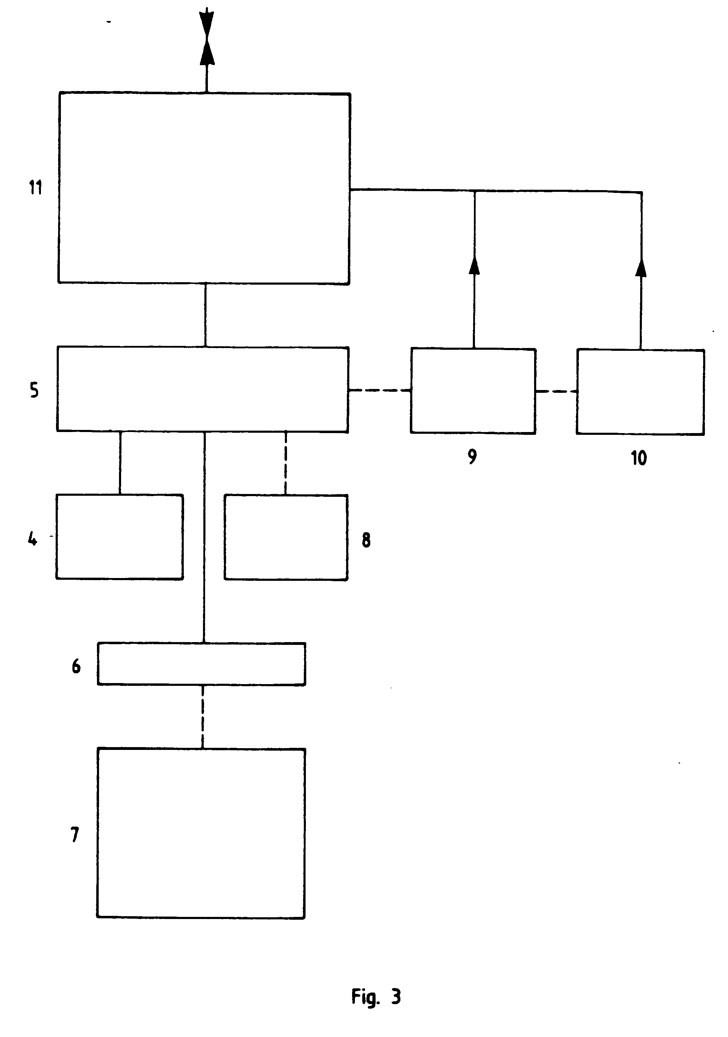

Die Fig. 3 zeigt eine Mobilstation 11, in der die Empfängereinheit 1, die Einrichtung zur Laufzeitdifferenzmessung 2 und der Arbeitsspeicher 3 bereits im Empfangsteil der Mobilstation 11 enthalten sind, wenn die Mobilstation für ein netzsynchrones Zellular-Mobilfunknetz mit Zuordnung des Eigenstandortes zur einer bestimmten Funkzelle konzipiert ist.

Infolgedessen sind für die genauere Bestimmung der Standortkoordinaten nur noch der Festspeicher 4 und die Recheneinheit 5 notwendig, wenn man zunächst auf die Anzeige der Standortkoordinaten verzichtet, was, wie bereits ausgeführt, für bestimmte Anwendungsfälle sinnvoll sein könnte.

Der Normalfall ist natürlich die Ausstattung der Mobilstation 11 mit einer Anzeige. Auch in der Fig. 3 sind zwei Varianten für die Anzahl möglich. Als Einfachlösung wird auch hier ein LCD-Display 6 vorgesehen. Die aufwendigere Lösung geht von einem graphischen Display 7 aus, welche seine Hintergrundinformation in Form eines Kartenausschnittes aus einer geeigneten Datenbank 8 bezieht. Auch die komfortablere Ausführung ist bereits bei Fahrzeugleitsystemen verwirklicht z. B. das auf der Industriemesse Hannover im April 1988 vorgestellte Verkehrsleitsystem Blaupunkt Travel Pilot bzw. die dort ausgelegten Firmenprospekte.

Die Fig. 3 zeigt aber noch eine besonders wichtige Einsatzmöglichkeit der erfindungsgemäßen Einrichtung, nämlich die Abfrage der Standortkoordinaten durch einen berechtigten Fremdteilnehmer. Dieser Fremdteilnehmer kann sowohl aus dem Mobilfunknetz als auch aus dem Fernsprechnetz die Nummer des Funkteilnehmers anwählen und hält dann anstelle eines Gespräches automatisch die Standortkoordinaten über den Sender der Mobilstation 11 zurückgesandt. Dabei kann die Rückübertragung der Standortkoordinaten über den normalen Sprachkanal, über die systemeigene Datenübertragung des Organisations- oder Sprachkanals oder über einen speziellen Datenkanal erfolgen. Die Übertragung auf den normalen Sprachkanal erfordert überhaupt keine Eingriffe in das bestehende Zellular-Mobilfunknetz.

Die Fig. 3 enthält für diese Alternative 2 Varianten. Einmal können die digitalen Standortkoordinaten über ein gestrichelt eingezeichnetes Modem 10 im Sprachkanal übertragen werden.

Es ist weiter möglich, in der Mobilstation oder beim abrufenden Fremdteilnehmer die Standortkoordinaten in einer digitalen Sprachausgabe 9 (in Fig. 3 ebenfalls gestrichelt gezeichnet) nach Art einer Zeitansage umzuwandeln.

Für Aufgaben der Wertransportsicherung kann sowohl jegliche Sprachkommunikation als auch die Anzeige 6 bzw. 7 und 8 wegfallen. Übrig bliebe ein Ortungsempfänger und ein Sender für die Übermittlung der Standortkoordinaten.

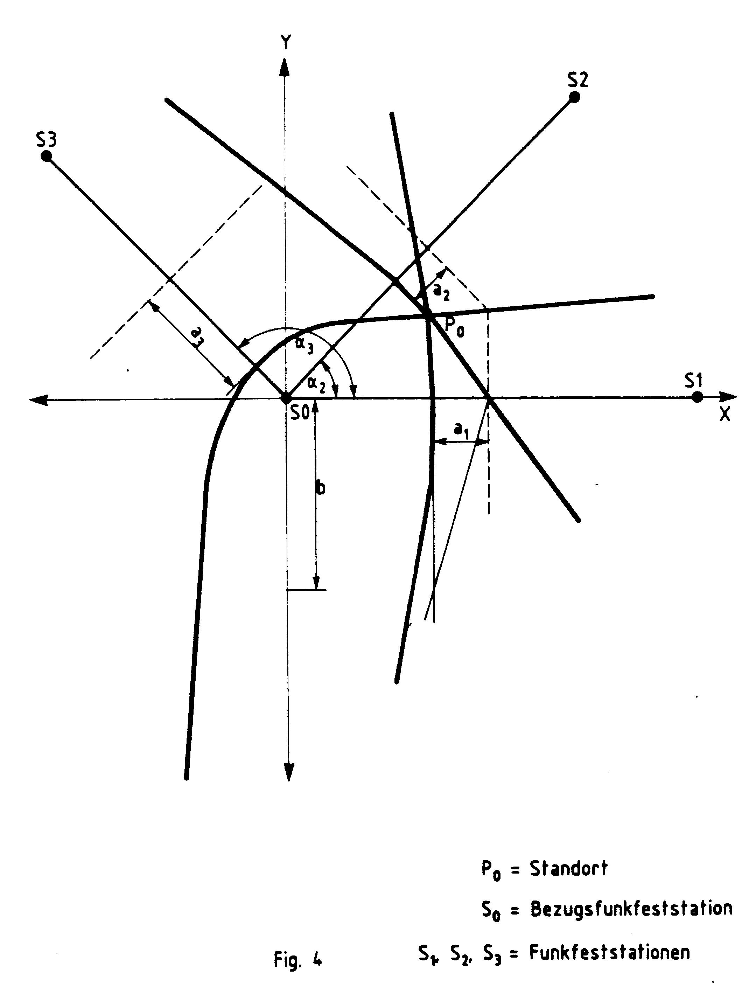

In folgendem wird anhand der Fig. 4 kurz die Anwendung des Hyperbel-Ortungsverfahrens beschrieben, wobei der Übersichtlichkeitshalber die Verhältnisse von vier Funkfestetotionen S0 bis S3 gezeichnet und erläutert sind.

In der Fig. 4 sind bekannt: Die Koordinaten der 4 Funkfeststationen aus dem Festspeicher 4 und der sich daraus ergebenden Entfernungen zwischen der Bezugsfunkfeststation S0 und den Funkfeststationen S1 bis S3 sowie die dazugehörigen Winkelbeziehungen $\alpha$ n. Bekannt sind weiterhin die relativen Entfernungen zu den Funkfestationen bezogen auf die Bezugsfunkfeststation aus dem Arbeitsspeicher 4. Unbekannt sind die gesuchten Standortkoordinaten $x_{Po}$ und $y_{Po}$.

Ausgehend von der Hyperbelgrundgleichung $\frac{x^2}{a^2} - \frac{y^2}{b^2}$ = 1 sind folgende grundsätzlichen Bedingungen zur Berechnung von $x_{Po}$ und $y_{Po}$ erfüllt:

$a_n$ (n = Nummer der Funkfestation) ergibt sich aus der halben relativen Entfernung zur Funkfestation $b_n$ ergibt sich aus der Wurzel von $e_n^2$ $a_n^2$, wobei $e_n$ sich aus der halben Entfernung zwischen der Bezugsfunkfeststation S0 und der Funkfestation Sn ergibt.

Hieraus lassen sich unterschiedliche Gleichungssysteme ableiten die zur Bestimmung des Eigenstandorts in der Recheneinheit 5 führen.

Der hierfür notwendige Softwareaufwand ist nicht unerheblich und steigt mit der Anzahl der in die Standortbestimmung einbezogenen Funkfeststationen, stellt aber keine unüberwindliche Schwierigkeit dar. Selbstverständlich wird der höhere Rechenaufwand eine höhere Genauigkeit der Standortkoordinaten mit sich bringen.

**Patentansprüche**

1. Einrichtung zur Eigenstandortbestimmung, insbesondere von Fahrzeugen, mit Hilfe einer Anzahl bestehender synchroner stationärer Funkstationen nach dem Hyperbel-Ortungsverfahren gekennzeichnet dadurch, daß
es sich bei dem Funkstationen um Funkfeststationen eines netzsynchronen Zellular-Mobilfunknetzes handelt, wobei in jeder Mobilstation zur Zuordnung ihres jeweiligen Standortes zu einer Funkzelle eine Messung der Laufzeitdifferenz mehrerer, von verschiedenen Funkfeststationen ausgesandter Datentelegramme stattfindet,
und daß die Einrichtung

a) eine Empfängereinheit (1) zum Empfang des netzeinheitlichen Organisationskanals mit Demodulator und Datenaufbereitung,
b) eine Einrichtung (2) zum Messen der Laufzeit mehrerer von verschiedenen Feststationen ausgesandten Datentelegramme zu dem von einer Bezugsfunkstation ausgesandten Datentelegramm,
c) einen Speicher (3), in dem die verschiedenen Laufzeitdifferenzen, geordnet nach Funkfeststationen abgespeichert sind,
d) einem Festspeicher (4) mit den Standortkoordinaten der Funkfeststationen und
e) einer Recheneinheit (5), in der die Standortkoordinaten des Festspeichers (4) mit dem Inhalt des Speichers (3) verknüpft und die Standortkoordinaten durch Mittelung der nach dem Hyperbel-Ortungsverfahren ermittelten Meßergebnisse errechnet werden können,

umfaßt.

2. Einrichtung nach Anspruch 1, dadurch gekennzeichnet, daß die Empfängereinheit (1), die Einrichtung (2) zur Laufzeitdifferenzmessung und der Arbeitsspeicher (3) Bestandteile des herkömmlichen Empfangsteils einer Mobilfunkstation (11) in einem netzsynchronen Zellular-Mobilfunknetz sind (Fig. 3).

3. Einrichtung nach Anspruch 2, dadurch gekennzeichnet, daß die Standortkoordinaten auf Anforderung eines berechtigten Teilnehmers auch eines festen (Draht- oder Glasfaser) Netzes durch Anwahl des Funkfeilnehmers und Rückübertragung über

dessen Sender abrufbar sind (Fig. 3).

4. Einrichtung nach Anspruch 3, dadurch gekennzeichnet, daß die Daten der Standortkoordinaten über ein Modem (10) in digitaler Form über einen Sprachkanal der Mobilstation rückübertragbar sind (Fig. 3).

5. Einrichtung nach Anspruch 3, dadurch gekennzeichnet, daß in den übertragungsweg zwischen Mobilstation (11) und anfragenden Teilnehmer eine digitale Sprachausgabe zur Umwandlung der digitalen Standortkoordinaten eingeschaltet ist (Fig. 3).

6. Einrichtung nach Anspruch 5, dadurch gekennzeichnet, daß die digitale Sprachausgabe (9) in der Mobilstation (11) angeordnet ist (Fig. 3).

7. Einrichtung nach Anspruch 5, dadurch gekennzeichnet, daß digitale Sprachausgabe in der beim abrufenden Teilnehmer angeordnet ist.

8. Einrichtung nach Anspruch 3, dadurch gekennzeichnet, daß die Rückübertragung über die systemeigene Datenübertragung des Organisationskanals erfolgt.

9. Einrichtung nach Anspruch 3, dadurch gekennzeichnet, daß die Rückübertragung über die systemeigene Datenübertragung des Sprachkanals erfolgt.

10. Einrichtung nach Anspruch 3, dadurch gekennzeichnet, daß die Rückübertragung auf speziellen Datenkanälen erfolgt.

11. Einrichtung nach Anspruch 1, dadurch gekennzeichnet, daß die Standortkoordinaten auf einem LCD-Display (6) als Anzeigeeinheit darstellbar sind (Fig. 2, Fig. 3).

12. Einrichtung nach Anspruch 1 oder 2, dadurch gekennzeichnet, daß die Anzeigeeinheit ein graphisches Display (7) mit Darstellung von Kartenauschnitten darstellt, die ihre Hintergrundinformation aus einer geeigneten Datenbank (8) (z. B. topographischen Datenbank) beziehen (Fig. 2, Fig. 3).

13. Einrichtung nach Anspruch 3, dadurch gekennzeichnet, daß die Mobilstation (11) unter Verzicht auf Teilnahme am Funktelefonverkehr und der hierzu notwendigen Sprach-Ein- und Ausgabe lediglich zur Meldung des eigenen Standortes dient.

14. Einrichtung nach Anspruch 13, dadurch gekennzeichnet, daß die Mobilstation (11) keine Anzeigeeinheit aufweist.

15. Einrichtung nach Anspruch 1, dadurch gekennzeichnet, daß die Standortkoordinaten zur Unterstützung vorhandener Koppelnavigationssysteme verwendbar sind.

## Claims

1. Device for own position-fixing, especially for vehicles, with the aid of a number of existing synchronous stationary radio stations using the hyperbolic positioning method, characterized in that the radio stations are fixed radio stations in a synchronous-network cellular mobile radio network, a measurement of the delay time difference of a plurality of data messages which are transmitted from various fixed radio stations being carried out in each mobile station in order to assign its respective position with respect to a radio cell, and in that the device comprises

   a) a receiver unit (1) for receiving the network-standard organization channel having a demodulator and data conditioning,
   b) a device (2) for measuring the delay time of a plurality of data messages, which have been transmitted by various fixed stations, with respect to the data message which is transmitted by a reference radio station,
   c) a memory (3) in which the various delay time differences are stored, organized on the basis of fixed radio stations,
   d) a read only memory (4) with the position coordinates of the fixed radio stations, and
   e) a computation unit (5) in which the position coordinates in the read only memory (4) are linked to the contents of the memory (3), and the position coordinates can be calculated by averaging the measurement results which have been obtained using the hyperbolic positioning method.

2. Device according to Claim 1, characterized in that the receiver unit (1), the device (2) for delay time difference measurement and the main memory (3) are components of the conventional receiving section of a mobile radio station (11) in a synchronous-network cellular mobile radio network (Fig. 3).

3. Device according to Claim 2, characterized in that the position coordinates can be called up on request by an authorized subscriber, even by one in a fixed (wire or glass-fibre) network, by dialling the radio subscriber and backward transmission via his transmitter (Fig. 3).

4. Device according to Claim 3, characterized in that the data relating to the position coordinates can be backward-transmitted via a modem (10), in digital form, via a voice channel of the mobile station (Fig. 3).

5. Device according to Claim 3, characterized in that a digital voice output is included in the transmission path between the mobile station (11) and the requesting subscriber, for conversion of the digital position coordinates (Fig. 3).

6. Device according to Claim 5, characterized in that the digital voice output (9) is arranged in the mobile station (11) (Fig. 3).

7. Device according to Claim 5, characterized in that the digital voice output is arranged at the calling subscriber.

8. Device according to Claim 3, characterized in that the backward-transmission takes place via the system's own data transmission of the organization channel.

9. Device according to Claim 3, characterized in that the backward-transmission takes place via the system's own data transmission of the voice channel.

10. Device according to Claim 3, characterized in that the backward-transmission takes place on specific data channels.

11. Device according to Claim 1, characterized in that the position coordinates can be displayed on an LCD display (6) as a display unit (Fig. 2, Fig. 3).

12. Device according to Claim 1 or 2, characterized in that the display unit presents a graphical display (7) having a display of map sections which take their background information from a suitable databank (8) (for example a topographic data bank) (Fig. 2, Fig. 3).

13. Device according to Claim 3, characterized in that the mobile station (11) is used only to report own position, and is not involved with the radiotelephone traffic and the voice input and output required for this purpose.

14. Device according to Claim 13, characterized in that the mobile station (11) does not have a display unit.

15. Device according to Claim 1, characterized in that the position coordinates can be used to support existing integrated navigation systems.

**Revendications**

1. Dispositif pour déterminer la position propre notamment de véhicules, à l'aide d'un certain nombre de stations radio, fixes, synchrones, travaillant selon le procédé de localisation hyperbolique, caractérisé en ce que les stations radio sont des stations d'un réseau radio mobile cellulaire, synchrone, et dans chaque station mobile, pour l'attribution de son emplacement propre respectif, on effectue, par rapport à une cellule radio, la mesure de la différence des temps de parcours de plusieurs télégrammes de données émis par plusieurs stations radio fixes, et l'installation comprend,

      a) une unité de réception (1) pour recevoir le canal d'organisation unitaire du réseau, comprenant un démodulateur et un moyen de traitement des données,
      b) une installation (2) pour mesurer le temps de parcours de plusieurs télégrammes de données émis par plusieurs stations fixes, par rapport à un télégramme de données émis par une station radio de référence,
      c) une mémoire (3) contenant les diverses différences de temps de parcours attribuées aux stations radio fixes,
      d) une mémoire morte (4) avec les cordonnées des emplacements des stations radio fixes, et
      e) une unité de calcul (5) qui combine les coordonnées des emplacements de la mémoire morte (4) avec le contenu de la mémoire (3) et calcule les coordonnées de position en faisant la moyenne des résultats de mesure obtenus selon le procédé de localisation hyperbolique.

2. Dispositif selon la revendication 1, caractérisé en ce que l'unité de réception (1), l'installation (2) pour mesurer la différence des temps de parcours et la mémoire active (3) font partie du récepteur usuel d'une station radio mobile (11) dans un réseau cellulaire, mobile, synchrone (figure 3).

3. Dispositif selon la revendication 2, caractérisé en ce que les coordonnées de position peuvent être appelées par la demande d'un abonné autorisé, même d'un abonné d'un réseau fixe (réseau câblé ou à fibres de verre) par le choix de l'abonné radio et la transmission en retour par son émetteur (figure 3).

4. Installation selon la revendication 3, caractérisée en ce que les données des coordonnées de position sont transmises en retour par un modem (10) sous forme numérique, par le canal vocal de la station mobile (figure 3).

5. Installation selon la revendication 3,
caractérisée en ce qu'
une émission vocale numérique, pour convertir les coordonnées de position numérique, est prévue dans le chemin de transmission entre la station mobile (11) et l'abonné appelant (figure 3).

6. Dispositif selon la revendication 5,
caractérisé en ce que
l'émission vocale numérique (9) est prévue dans la station mobile (11) (figure 3).

7. Installation selon la revendication 5,
caractérisée en ce que
l'émission vocale numérique est prévue chez l'abonné appelant.

8. Installation selon la revendication 3,
caractérisée en ce que
la transmission en retour se fait par la transmission de données propre au système du canal d'organisation.

9. Dispositif selon la revendication 3,
caractérisé en ce que
la transmission en retour se fait par la transmission de données propre au système du canal vocal.

10. Dispositif selon la revendication 3,
caractérisé en ce que
la transmission en retour se fait par des canaux de données particuliers.

11. Dispositif selon la revendication 1,
caractérisé en ce que
les coordonnées de position peuvent être représentées sur un moyen d'affichage à cristaux liquide LCD (6) constituant une unité d'affichage (figure 2, figure 3).

12. Dispositif selon la revendication 1 ou 2,
caractérisé en ce que
l'unité d'affichage est une unité d'affichage graphique (7) représentant des extraits de carte dont l'information de fond se rapporte à une banque de données propres (8) (par exemple une banque de données topographiques) (figure 2, figure 3).

13. Dispositif selon la revendication 3,
caractérisé en ce que
la station mobile (11) sert uniquement à la signalisation de la position propre au détriment de la participation à la communication téléphonique radio et des entrées et sorties vocales nécessaires à cela.

14. Dispositif selon la revendication 13,
caractérisé en ce que
la station mobile (11) ne comporte pas d'unité d'affichage.

15. Dispositif selon la revendication 1,
caractérisé en ce que
les coordonnées de position sont exploitables avec l'assistance de systèmes de navigation couplés, existants.

Zeitschlitzrahmen

(Aussendung der Funktelegramme auf den, für die Funkfeststationen festgelegten Zeitschlitzen)

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 32 |

→ t

2,4 s

Feststellen der Bezugsfunkfeststation mittels relat. Entfernungsmessung (Laufzeitdifferenz)

n

Datentelegramme

Station B   Zeitschlitz 6

Station C   Zeitschlitz 15

Bezugsfunkfeststation A   in Zeitschlitz 3

Station D   Zeitschlitz 25

Station E   Zeitschlitz 30

Station F   Z. 32

→ t

$t_D$

$t_C$

$t_B$

$t_E$

$t_F$

Laufzeitdiffer. bez. auf Bezugsfunkfeststation

Fig. 1

8

Fig. 2

Fig. 3

Fig. 4

$P_0$ = Standort

$S_0$ = Bezugsfunkfeststation

$S_1$, $S_2$, $S_3$ = Funkfeststationen